# EUROPÄISCHE PATENTSCHRIFT

(11) **EP 0 713 600 B1**
(45) Veröffentlichungstag und Bekanntmachung des Hinweises auf die Patenterteilung: **15.10.1997**
(21) Anmeldenummer: 94922831.6
(22) Anmeldetag: 29.07.1994
(51) Int. Cl.: G21C 3/322

(54) **BRENNELEMENT FÜR EINEN SIEDEWASSERREAKTOR MIT EINSTELLBAREM BYPASS**
FUEL ELEMENT FOR A BOILING WATER REACTOR WITH ADJUSTABLE BY-PASS
ELEMENT COMBUSTIBLE D'UN REACTEUR A EAU BOUILLANTE A BY-PASS REGLABLE

(30) Priorität: 11.08.1993 DE 4327001
(43) Veröffentlichungstag der Anmeldung: 29.05.1996
(73) Patentinhaber: SIEMENS AKTIENGESELLSCHAFT, 80333 München (DE)
(72) Erfinder: LIPPERT, Hans-Joachim, D-91315 Höchstadt (DE); MEIER, Werner, D-91358 Kunreuth (DE)
(86) Internationale Anmeldenummer: DE9400894
(87) Internationale Veröffentlichungsnummer: WO9504993

(56) Entgegenhaltungen:
- EP-A- 0 550 868
- DE-A- 2 620 343
- DE-A- 3 150 477
- DE-A- 3 440 637
- GB-A- 2 091 932
- US-A- 3 053 746

## Beschreibung

Die Erfindung betrifft ein Brennelement für einen Siedewasserreaktor. Derartige Brennelemente sind von einem Kasten mit einem offenen oberen und unteren Ende umgeben, wobei der Kastenquerschnitt quadratisch oder zumindest in Form eines rotationssymmetrischen regulären Polygons ist. In das untere Ende dieses Kastens greift von unten der obere Teil eines Übergangsstücks ein, das sich zu einem Einlaß am unteren Ende zu trichterförmig verjüngt. Das obere Ende dieses Übergangsstücks trägt eine Bodenplatte, die das untere offene Kastenende abdeckt und Durchtrittsöffnungen für Kühlmittel (Wasser) aufweist.

Am oberen Ende des Brennelements sitzt ein Kopfteil mit einem Griff und einer Deckplatte, die ebenfalls Durchtrittsöffnungen für Kühlmittel (Wasser) trägt und das offene obere Kastenende abdeckt. Zwischen Bodenplatte und Deckplatte ist ein Bündel von Brennstäben gehalten.

Häufig ist etwa in der Mitte des Brennelements ein Wasserkanal, z. B. ein oder mehrere Rohre, angeordnet. Vorteilhaft wird als Wasserkanal ein Rohr mit quadratischem Querschnitt verwendet, das die Stelle mehrerer Brennstäbe einnimmt.

Das Kühlmittel tritt aus einer Gitterplatte am Boden des Reaktorkerns aus und über den Einlaß am unteren Ende des trichterförmigen Übergangsstücks in das Brennelement ein. Dann strömt es im Inneren des Brennelement-Kastens an den Brennstäben entlang bis zur Deckplatte, wo es weitgehend in Form von Wasserdampf austritt. Ein Teil des Wassers kann dabei ohne zu verdampfen durch den Wasserkanal strömen, so daß auch dem oberen Teil des Brennelementes flüssiges Wasser als Moderator zur Verfügung steht.

Infolge des Strömungswiderstandes im Inneren des Kastens erleidet das den Kasten durchströmende Wasser einen erheblichen Druckverlust, es tritt also mit einem geringeren Druck aus dem Brennelement aus. Dieser geringere Druck liegt auch in den Zwischenräumen zwischen den einzelnen Brennelementen des Reaktorkerns vor, so daß zwischen dem Kasteninnenraum und dem Kastenaußenraum ein Druckunterschied entsteht, der die Kastenwände nach außen biegt, die unter dem Einfluß des Neutronenflusses während des Reaktorbetriebes allmählich ihre Stabilität verlieren können. Dadurch können auch Spalte zwischen dem Übergangsstück und dem unteren Rand des Brennelementkastens entstehen, durch die ein Teil des in das Übergangsstück eingeleiteten Kühlmittels austreten kann, wodurch sich die Strömungsverhältnisse während des Reaktorbetriebes allmählich verändern.

Prinzipiell ist ein derartiger Bypassstrom, der zwischen dem Übergangsstück und dem unteren Rand des Brennelementkastens aus dem Übergangsstück austritt, unvermeidlich, wenn diese Teile nicht vollkommen dicht aneinander anliegen. Der BypassStrom ist auch erwünscht, um zusätzlich über die Zwischenräume zwischen den einzelnen Brennelementkästen flüssigen Moderator von außen an den oberen Teil der Brennelemente heranzuführen. Außerdem wird damit ein Druckausgleich erreicht, der eine übermäßige Verformung der Kasten verhindert. Es ist jedoch erforderlich, diesen Bypassstrom zu stabilisieren und einzustellen, um innerhalb des Brennelementes selbst gewünschte Strömungsverhältnisse zu erreichen. Daher ist häufig vorgesehen, an der Bodenplatte oder an unteren Endstücken von Brennelementen, die an der Bodenplatte gehalten sind, breite Blattfedern anzuordnen, die sich am Brennelementkasten und am Übergangsstück bzw. der Bodenplatte abstützen und sich dem Spalt, der zwischen diesen Teilen unvermeidlich ist, auf Grund ihrer Elastizität anpassen, also die Bypass-Öffnung kontrolliert versperren.

Derartige Dichtfedern stellen aber Kleinteile dar, die bei der Montage eigens eingesetzt werden müssen und bei Inspektionsarbeiten abbrechen oder verlorengehen können. Daher sind andere, einfachere Konstruktionen zur Einstellung eines definierten Bypass-Stromes wünschenswert.

Je nach Lage des Brennelementes im Reaktorkern und nach der Position der Steuerstäbe, die innerhalb des Reaktorkerns zwischen bestimmten Brennelementen angeordnet sind, kann es wünschenswert sein, den Bypassstrom nur von bestimmten Seiten aus dem Brennelement herauszuleiten, also dem zwischen den Brennelementen strömenden Kühlmittel eine erwünschte, definierte Strömungsunsymmetrie einzuprägen.

Eine unerwünschte Strömungsunsymmetrie entsteht dadurch, daß sich die Brennelementkästen während des Reaktorbetriebs auch entsprechend ihrer jeweiligen Lage unsymmetrisch verbiegen können. Eine derartige Verbiegung kann ausgeglichen werden, wenn z. B. nach einer gewissen Standzeit die Lage des Brennelements und seines Kastens verändert wird, z. B. das Brennelement gedreht oder an den Platz eines anderen Brennelements gesetzt wird, so daß nunmehr eine der bereits erfolgten Verbiegung entgegengesetzte Verbiegung entsteht. Dadurch kann der Einfluß dieser Verbiegungen auf die Standdauer des Brennelementkastens verringert und beispielsweise der Kasten eines Brennelements bei einem Ersatz verbrauchter Brennstäbe für neue Brennelemente weiterverwendet werden.

Die neue Lage des Brennelements und seines Kastens kann aber nicht ausschließlich nach den Gesichtspunkten der Kastenverbiegung gewählt werden, da mit der neuen Lage auch die Richtung des Bypassstroms geändert ist.

Der Erfindung liegt die Aufgabe zu Grunde, ein Brennelement zu schaffen, das trotz eines möglichst einfachen Aufbaus einen definierten Bypassstrom sicherstellt.

Nach einem Aspekt der Erfindung wird dadurch ein Brennelement geschaffen, das eine Veränderung des aus dem Übergangsstück in den Außenraum des Brennelementkastens austretenden Bypassstrom auch dann praktisch konstant hält, wenn sich die Wände des Kastens während des Reaktorbetriebes ausbeulen und keine Dichtfeder verwendet wird, um einen Spalt zwischen dem Übergangs stück und dem unteren Rand des Brennelementkastens weitgehend abzudichten.

Nach einem anderen Aspekt der Erfindung ist es möglich, die Orientierung des Brennelementkastens zur Richtung des Neutronenflusses, der Lage von Steuerelementen oder anderen, durch die Geometrie des Reaktorkerns vorgegebenen Richtungen unabhängig davon vorzugeben, durch welche Seite des Brennelements der Bypassstrom aus dem Brennelement geleitet wird.

Nach einem weiteren Aspekt wird ein Brennelement geschaffen, das aus einem vom Kasten und Übergangsstück gebildeten "Kocher" und einem in den Kocher eingesetzten, die Brennstäben tragenden "Skelett" besteht, bei dem aber die Seiten des Köchers, durch die der Bypassstrom herausgeleitet wird, unabhängig von der Orientierung des Brennelementkastens vorgegeben werden können.

Die Erfindung schlägt zunächst ein Brennelement mit den Merkmalen des Anspruchs 1 vor.

Dabei ist also das Brennelement von einem Kasten mit einem offenen oberen und unteren Ende umgeben, wobei der Kastenquerschnitt die Form eines Quadrates oder zumindest eines rotationssymmetrisch regelmäßigen Polygons aufweist. In das untere Ende des Kastens reicht von unten der obere Teil eines Übergangsstücks, das sich nach unten hin zu einem Einlaß trichterförmig verjüngt. Das untere Ende des Kastens ist an allen Seiten mit dem Übergangsstück befestigt. Vom oberen Ende des Kastens bis zum Rand des Übergangsstücks ragt ein Einsatz in den Kasten. Dieser Einsatz enthält vor allem ein Kopfteil mit einem Griff, an dem das obere Ende eines Wasserrohrs tragend befestigt ist, und eine am Griff und/oder Wasserrohr gehaltene Deckplatte. Ferner enthält der Einsatz eine am unteren Ende des Wasserrohr befestigte Bodenplatte, die am oberen Rand des Übergangsstücks aufsitzt. Kopfteil, Wasserrohr und Bodenplatte bilden also ein in den Kasten einsetzbares, auf dem Übergangsstück aufsitzendes Skelett, bei dem außerdem in verschiedenen axialen Positionen gitterförmige Abstandhalter am Wasserrohr befestigt sein können. Solange das Kopfteil vom Skelett abgenommen ist, können Brennstäbe durch die Maschen der Abstandhalter eingesetzt werden. Im montierten Zustand enthält der Einsatz daher auch ein zwischen Bodenplatte und Deckplatte gehaltenes Bündel von Brennstäben.

Dabei tragen alle Seiten des Brennelementkastens unterhalb der Bodenplatte mindestens eine seitliche Bypassöffnung, wobei wenigstens an einer Seite eine dieser Bypassöffnungen mit dem Innenraum des Übergangsstücks verbunden ist, wozu ein zwischen der Kastenwand und dem Übergangs stück mit seiner daran angeordneten Bodenplatte gebildeter Strömungskanal dient; an wenigstens einer anderen Seite des Kastens ist der durch die Bypassöffnungen gebildete Bypass durch eine Seitenfläche an der Bodenplatte versperrt.

Dabei kann die Bodenplatte über Stellfüße auf dem oberen Rand des Übergangsstücks aufliegen, wobei wenigstens ein Stellfuß eine Ausnehmung zur Bildung des Strömungskanals und wenigstens ein anderer Stellfuß die Seitenfläche zum Versperren des Bypasses trägt.

Vorteilhaft kann jede Seite des Kastens in Nähe der Mittellinie eine Bypassöffnung tragen. Die Befestigung zwischen der jeweiligen Kastenseite und der entsprechende Seite des Übergangsstücks sorgt dafür, daß sich dort ein wesentlicher Spalt, der eine zusätzliche Bypassöffnung zwischen Übergangsstück und Kastenrand darstellen würde, auch dann nicht ausbildet, wenn der Kasten sich beim Reaktorbetrieb ausbeult. Diese Befestigung kann vorteilhaft lösbar und etwa in der Mittellinie der jeweiligen Kastenwand erfolgen, insbesondere kann hierzu eine Schraube vorgesehen sein, die die jeweilige Kastenwand mit einer Anlagefläche an der Seite des Übergangsstücks verbindet.

Diese Bauweise, bei der ein die Brennstäbe tragendes Skelett in einen von Übergangs stück und Kasten gebildeten Kocher eingesetzt wird, ist insbesondere bei rohrförmigen Wasserkanälen (insbesondere Wasserkanälen mit quadratischem Querschnitt) vorteilhaft, die allseitig von Brennstäben des Bündels umgeben ist, also ungefähr in der Mitte des Brennelementes sitzt.

Die Erfindung sieht auch ein Brennelement mit den Merkmalen des Anspruchs 7 vor.

Dabei ist also das Brennstab-Bündel von einem polygonalen Kasten mit einem offenen unteren Ende umgeben, in das von unten der obere Teil eines Übergangsstücks eingreift, das sich zu einem Einlaß an seinem unteren Ende zu verjüngt. Das Übergangsstück trägt seitliche Auflageflächen, die an allen Seiten des Kastens praktisch formschlüssig anliegen. Das offene obere Ende des Kastens ist oberhalb des Brennstabbündels von einem Kopfteil abgedeckt, das eine Deckplatte mit Durchtrittsöffnungen für das Kühlmittel ("perforierte Deckplatte") trägt, während das untere Ende des Kastens unterhalb der Brennstäbe mit einer an den oberen Rand des Übergangs stück anschließenden perforierten Bodenplatte abgedeckt ist. Unterhalb dieser Bodenplatte wird aus dem Innenraum des Übergangsstücks ein Bypassstrom in den Kastenaußenraum geleitet, wozu eine oder mehrere Durchtrittsöffnungen vorgesehen sind, die im Kasten und dem Übergangs stück oder wenigstens im Kasten oder im Übergangsstück angeordnet sind. Dabei ist wenigstens eine Kastenseite gegenüber dem Übergangsstück abgedichtet, während wenigstens eine andere Seite die Durchtrittsöffnungen für den Bypassstrom trägt und passierbar ist.

Vorteilhaft sind dabei die Wände des Kastens an ihrem unteren Ende derart an den Auflageflächen des Übergangs stücks befestigt, insbesondere lösbar befestigt (z. B. angeschraubt), daß der Rand des Kastens praktisch abgedichtet oder zumindest nur ein Spalt, der auch bei einem Ausbeulen des Kastens weitgehend konstant bleibt, zwischen dem Kastenrand und dem Übergangsstück entsteht.

Dabei kann es vorteilhaft sein, daß alle Kastenwände Durchtrittsöffnungen tragen, aber ein Teil der Durchtrittsöffnungen durch an den Kastenwänden anliegende Außenflächen des Übergangsstücks oder nach unten ragende Vorsprünge der Bodenplatte versperrt sind. Dadurch wird es möglich, bei einer ersten Relativlage zwischen Kasten und Übergangsstück einen Teil der Durchtrittsöffnungen zu versperren, bei einer anderen Relativlage, die durch einen von der Symmetrie des Brennelements vorgegebenen Relativwinkel bestimmt ist, einen anderen Teil der Durchtrittsöffnungen zu versperren.

Weitere vorteilhafte Ausbildungen der Erfindung sind anhand von Ausführungsbeispielen und 5 Figuren näher erläutert.

Es zeigen:
Figur 1 eine Seitenansicht des erfindungsgemäßen Brennelements, bei der die Kastenwand weitgehend weggebrochen ist, um den inneren Aufbau des Brennelementes freizugeben,
Figur 2 eine Seitenansicht des Unterendes des Brennelements mit einem Teilquerschnitt auf der linken Seite,
Figur 3 die entsprechende Seitenansicht mit einem Querschnitt durch die rechte Seite,
Figur 4 einen Schnitt und
Figur 5 eine Aufsicht auf die Bodenplatte.

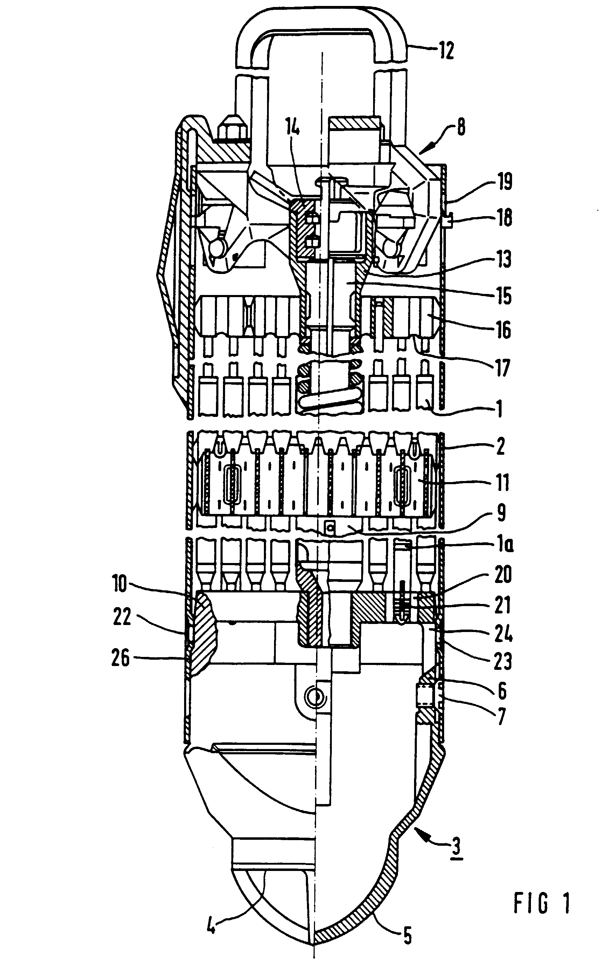

Das Ausführungsbeispiel der Figur 1 ist nach der Skelettbauweise aufgebaut, wie sie in der internationalen Patentanmeldung PCT/DE 91/00168 (WO-91/13441) beschrieben ist. Dabei bildet ein die Brennstäbe 1 umgebender Kasten 2 einen Kocher mit dem Übergangsstück 3 als Boden des Kochers.

Dieses Übergangs stück 3 weist an seinem trichterförmigen unteren Ende einen kreisförmigen Einlaß 4 für Wasser auf, über den sich sternförmig angeordnete Stege 5 wölben, mit denen das Brennelement in entsprechende Öffnungen des unteren Kerngitters eingesetzt ist. Der obere Rand 6 ist als Anlagefläche ausgebildet, der von unten praktisch formschlüssig in den offenen, unteren Rand des Brennelementes eingreift und dort über Schrauben 7 mit den Flächen des viereckigen Kastens 2 verschraubt ist. Diese Schrauben halten das Übergangsstück und den Brennelementkasten auch dann praktisch dicht zusammen, wenn sich der Brennelementkasten in seinem oberen Bereich auf Grund des Strömungswiderstandes im Inneren des Brennelementes und des dadurch entstehenden Überdrucks in den Kasten-Außenraum wölbt.

Es ist daher keine Dichtungsfeder zwischen dem Übergangsstück oder der Bodenplatte 10 erforderlich, um einen etwaigen Spalt elastisch auszufüllen und für den Bypassstrom weitgehend zu sperren.

In diesen Kocher ist ein Einsatz eingesetzt, dessen Skelett aus einem Kopfteil 8, einem ungefähr zentralen , als Kühlmittelkanal dienenden Wasserrohr 9 und der Bodenplatte 10 besteht, wobei das Wasserrohr 9 noch gitterförmige Abstandhalter 11 trägt, in deren Maschen die Brennstäbe 1 abgestützt sind.

Das Kopfteil 8 ist entsprechend der gleichzeitig eingereichten deutschen Patentanmeldung "Brennelement eines Siedewasserreaktors mit einem rationell gefertigten Kopfteil" aufgebaut und enthält einen Griff 12 mit einer Traghülse 13, in die eine Verlängerung 15 des Wasserrohrs 9 eingreift. Über eine Endmutter, die Hülse 14 eines Bajonettverschlusses oder einen anderen Anschlag ist die Verlängerung 15 des Kühlmittelrohres tragend an der Hülse 13 des Griffs 12 befestigt, wie dies in der EP-A-549 844 beschrieben ist. An dieser Verbindung zwischen dem Griff 8 und dem Wasserrohr 9 ist die Deckplatte 16 mit den Durchtrittsöffnungen 17 gehalten.

Ferner sind im Griff Klinken oder Riegel 18 gelagert, die durch Fenster 19 im oberen Rand des Kastens 2 greifen, wie dies in der nicht vorveröffentlichten EP-A-550 868 beschrieben ist, um eine redundante Tragstruktur zu erzeugen, und das Brennelement am Griff 12 auch dann noch anheben zu können, wenn das Wasserrohr 9 gebrochen sein sollte.

Am unteren Ende des Wasserrohres 9 ist die Bodenplatte 10, deren Durchtrittsöffnungen 20 für das Kühlmittel z. B. durch elektrochemische Materialabtragung entsprechend der nicht vorveröffentlichten DE-A-4240537 gefertigt sein kann, tragend befestigt. Dabei ist ein eingeschraubter Sockel 21 erkennbar, an dem Brennstäbe la gehalten sein können, deren Länge nur einen Teil der normalen Brennstablänge beträgt. Die Befestigung des Wasserrohres 9, des Sockels 21 und gegebenenfalls der Brennstäbe 1 an der Bodenplatte kann entsprechend der WO-92/05565 erfolgen.

Alle vier Seiten des Brennelementkastens tragen unterhalb der Bodenplatte 10 Bypass-Öffnungen 23, während die Bodenplatte nach unten ragende Vorsprünge aufweist, die als Stell-Füße zum Abstützen der Bodenplatte 10 auf dem oberen Rand 6 des Übergangsstücks dienen. Im linken Teil der Figur 1 ist dargestellt, daß die Bodenplatte mit diesen Vorsprüngen an dieser linken Wand des Brennelementkastens praktisch formschlüssig anliegt und somit die entsprechende Bypass-Öffnung 23 verschließt. Der entsprechende Stellfuß, der an der rechten Kastenwand anliegt, besitzt an dieser Stelle jedoch einen Schlitz, so daß ein Strömungskanal 24 entsteht, der die Bypass-Öffnung 23 mit dem Innenraum des Übergangsstück 3 verbindet.

Daher kann der Einsatz, der aus Griff, Wasserrohr, Deckplatte, Bodenplatte und Brennstäben gebildet wird, nach Entriegeln der Klinke 18 aus dem Köcher herausgehoben, z. B. um 180 Grad gedreht und wieder eingesetzt werden. Während also in der alten Lage der Bypassstrom nach rechts aus dem Brennelementkasten geleitet wird, strömt er in der neuen Lage nach links.

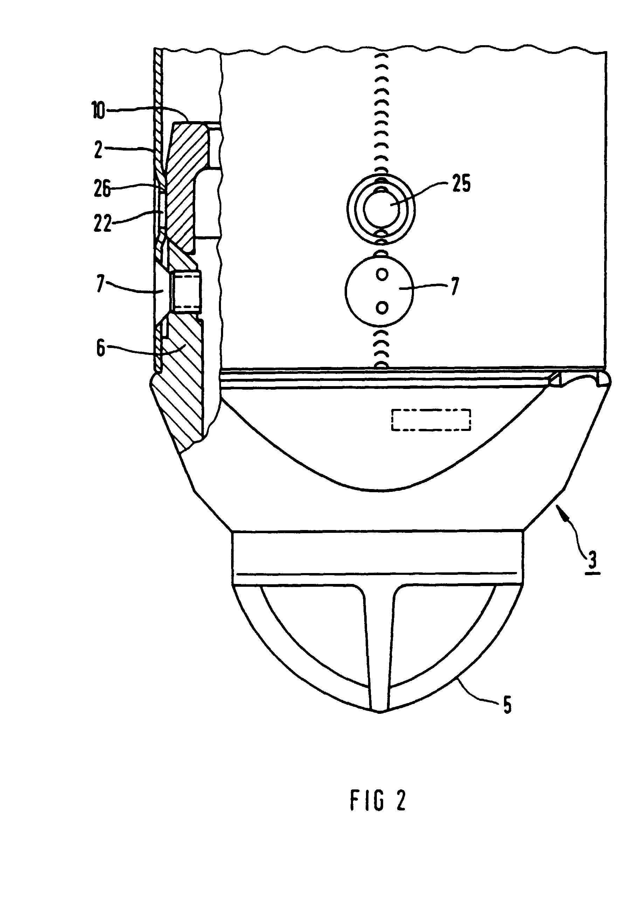

In Figur 2 ist die Bypass-Öffnung 25 und die Schraube 7 auf der dem Betrachter zugewandten Vorderseite erkennbar, die ungefähr auf der Mittellinie dieser Kastenseite liegen. Auch die linke Seite zeigt eine Schraube 7, die den entsprechenden unteren Rand des Brennelementkastens 2 am den oberen Rand des Übergangsstücks 3 bzw. an einer Auflagefläche 6 dieses Randes hält. Darüber ist die Bypass-Öffnung 22 der linken Kastenwand gezeigt, die jedoch durch die Seitenfläche eines Stellfußes 26 an der Unterseite der Bodenplatte 10 versperrt ist.

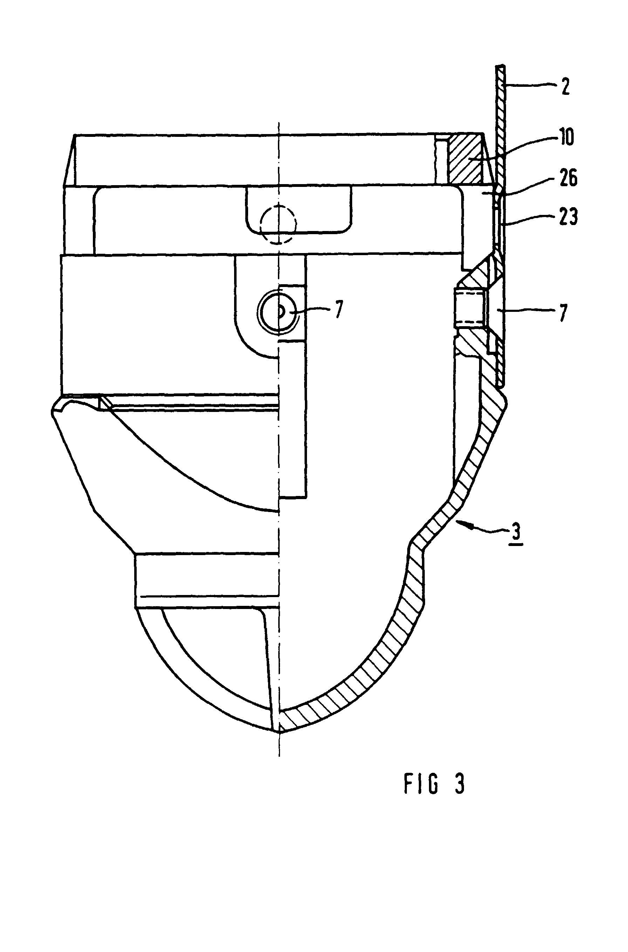

Auf der rechten Seite jedoch ist, wie Figur 3 zeigt, die entsprechende Bypass-Öffnung 23 zum Innenraum des Übergangsstücks 3 hin mit einem Strömungskanal verbunden, der durch einen Schlitz im Stellfuß 26 gebildet wird.

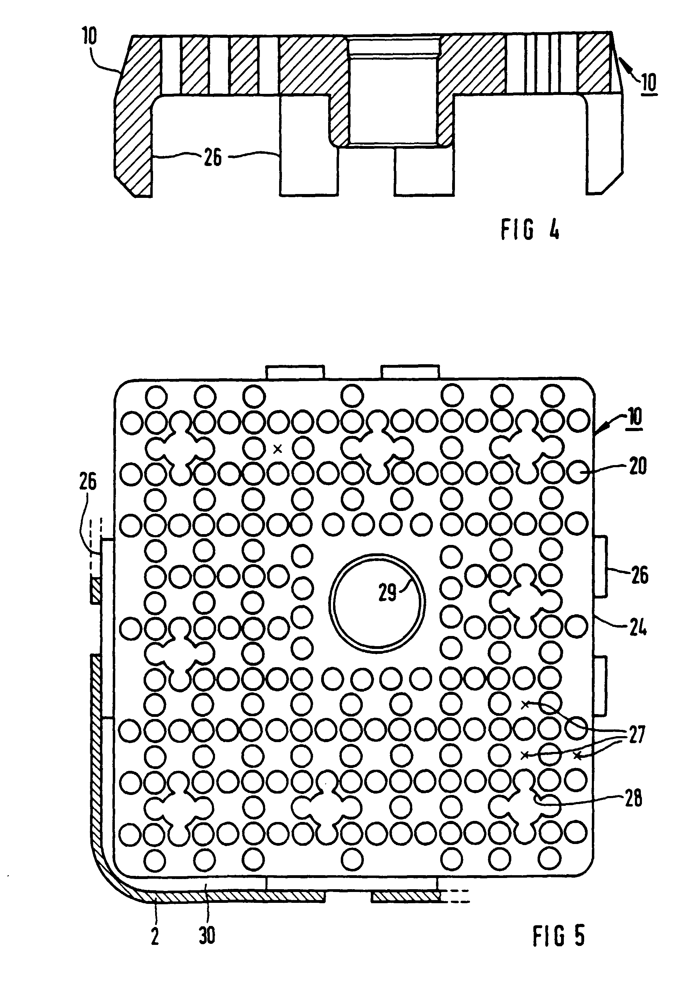

Figur 4 zeigt deutlicher den linken Stellfuß, der ungeschlitzt ist und die Bypass-Öffnung der linken Kastenseite versperrt, während der Stellfuß 26 der rechten Seite geschlitzt ist und den Strömungskanal 24 bildet, wie aus Figur 5 deutlich hervorgeht.

In Figur 5 sind außerdem die Durchtrittsöffnungen 20 in der Bodenplatte deutlicher erkennbar, die zwischen den Positionen 27 der Brennstabe angeordnet sind. Dabei sind auch die Positionen 28 erkennbar, an denen die Sockel 21 für die erwähnten, teillangen Brennstäbe la vorgesehen sind. Da es sich hierbei um ein Brennelement mit 91 Brennstäben handelt, die in 10 Reihen und 10 Spalten angeordnet sind, kann das Kühlmittelrohr, dessen unteres offenes Ende rohrförmig in eine Öffnung 29 der Bodenplatte ragt und die Positionen von 3x3 Brennstäben einnimmt, nicht exakt in der Mitte des Brennelementes liegen.

In Figur 5 ist dabei auch die linke vordere Ecke des ( im übrigen weggebrochenen) Brennelementkastens 2 gezeigt, wobei der zwischen der Bodenplatte 10 und diesem Brennelementkasten entstehende Spalt 30 zum Inneren des Übergangsstückes 3 hin durch den oberen Rand 6 des Brennelementkastens, der hier praktisch formschlüssig (d. h. ohne Ausbildung eines nennenswerten Zwischenraumes) in den Brennelementkasten eingreift, weitgehend abgedichtet.

Der Einsatz mit der Bodenplatte, die in einer Stellung bestimmte Bypass-Öffnungen freigibt, die sie in einer anderen Stellung versperrt, kann auch auf eine andere Weise zusammengesetzt sein. Darüber hinaus kann das Wesen der Erfindung, nämlich durch eine feste, vorzugsweie eine lösbare Verbindung den unteren Kastenrand gegenüber der Bodenplatte bzw. dem Brennelement-Fuß abzudichten und nur asymmetrisch angeordnete Bypass-Öffnungen freizulassen, auch bei anderen BrennelementKonstruktionen angewendet werden.

## Patentansprüche

1. Brennelement für einen Siedewasserreaktor mit folgenden Merkmalen:
a) das Brennelement ist von einem Kasten (2) mit einem Querschnitt in Form eines rotationssymmetrisch regelmäßigen Polygons und mit einem offenen oberen und unteren Ende umgeben,
b) in das untere Ende greift von unten ein oberes Teil (6) eines sich zu einem Einlaß (4) am unteren Ende hin trichterförmig verjüngenden Übergangsstücks (3),
c) das untere Ende des Kastens (2) ist an allen Seiten am Übergangsstück (3) befestigt,
d) vom oberen Ende des Kastens ragt bis zum Übergangsstück ein Einsatz in den Kasten mit
i) einem Kopfteil (8), das einen Griff (12), an dem das obere Ende eines Kühlmittelkanals (9) befestigt ist, und eine am Griff und/oder Kühlmittelkanal gehaltene Deckplatte (16) aufweist,
ii) einer am unteren Ende des Kühlmittelkanals (9) befestigten, am oberen Rand des Übergangsstücks (3) aufsitzenden perforierten Bodenplatte (10) und
iii) einem zwischen Bodenplatte (10) und Deckplatte (16) gehaltenen Bündel von Brennstäben (1, 1a) und
e) alle Seiten des Kastens (2) tragen unterhalb der Bodenplatte (10) jeweils mindestens eine seitliche Bypass-Öffnung (22, 23, 25), wobei wenigstens an einer Seite eine Bypass-Öffnung (24) durch einen zwischen der Kastenwand und dem Übergangsstück (3) mit der aufsitzenden Bodenplatte (10) angeordneten Strömungskanal (24) mit dem Innenraum des Übergangsstücks (3) verbunden und wenigstens an einer anderen Seite die Bypass-Öffnung (22) durch eine Seitenfläche an der Bodenplatte versperrt ist.

2. Brennelement nach Anspruch 1,
**dadurch gekennzeichnet**, daß jede Seite des Kastens in Nähe der Mittellinie eine Bypass-Öffnung (22, 23, 25) trägt.

3. Brennelement nach Anspruch 1 oder 2,
**dadurch gekennzeichnet**, daß jede Seite des Kastens praktisch dicht mit einer Anlagefläche (6) des Übergangsstücks (3) verbunden ist.

4. Brennelement nach einem der Ansprüche 1 bis 3 ,
**dadurch gekennzeichnet**, daß jede Seite des Kastens in Nähe der Mittellinie mit einer Anlagefläche (6) des Übergangsstücks (3) verschraubt ist.

5. Brennelement nach einem der Ansprüche 1 bis 4,
**dadurch gekennzeichnet**, daß die Bodenplatte (10) über Stellfüße (26) auf dem oberen Rand (6) des Übergangsstücks (3) aufliegt und daß wenigstens ein Stellfuß eine Ausnehmung zur Bildung des Strömungskanals (24) und wenigstens ein anderer Stellfuß die Seitenfläche zum Versperren der Bypass-Öffnung trägt.

6. Brennelement nach einem der Ansprüche 1 bis 5,
**dadurch gekennzeichnet**, daß der Kühlmittelkanal (9) allseitig von Brennstäben des Bündels umgeben ist.

7. Brennelement für einen Siedewasserreaktor mit folgenden Merkmalen:
a) ein Bündel von Brennstäben (1, 1a) ist von einem rotationssymmetrisch polygonalen Kasten (2) mit einem offenen unteren Ende umgeben,
b) in das offene untere Ende greift von unten ein oberes Teil (6) eines sich zu einem Einlaß (4) am unteren Ende verjüngenden Übergangsstücks,
c) an allen Seiten des Kastens liegen Auflageflächen (6) des Übergangsstücks praktisch formschlüssig an,
d) das offene obere Ende des Kastens ist oberhalb des Brennstabbündels von einem Kopfteil mit einer perforierten Deckplatte (16) und das offene untere Ende des Kastens unterhalb der Brennstäbe von einer perforierten Bodenplatte (10) abgedeckt, und
e) aus dem Innenraum des Übergangsstücks (3) wird ein BypassStrom über eine oder mehrere seitliche Durchtrittsöffnungen derart in den Außenraum des Kastens und des Übergangsstücks geleitet, daß ein Teil der Kastenseiten gegenüber dem Übergangsstück praktisch abgedichtet und nur ein anderer Teil der Kastenwände vom Bypassstrom passierbar ist.

8. Brennelement nach Anspruch 7,
**dadurch gekennzeichnet**, daß die Kastenwände an den Auflageflächen des Übergangsstücks befestigt, vorzugsweise lösbar befestigt sind.

9. Brennelement nach Anspruch 7 oder 8,
**dadurch gekennzeichnet**, daß alle Kastenwände rotationssymmetrisch um 90 ° gegeneinander versetzte Bypass-Öffnungen (22, 23, 25) tragen, aber ein Teil der Bypass-Öffnungen durch an den Kastenwänden anliegende Außenflächen der Bodenplatte (20) oder nach unten ragender Vorsprünge (26) der Bodenplatte versperrt sind.

10. Brennelement nach Anspruch 9,
**dadurch gekennzeichnet**, daß bei einer ersten Relativlage zwischen dem Kasten und der Bodenplatte ein erster Teil der Bypass-Öffnungen, bei einer gegenüber der ersten Relativlage um einen durch die Symmetrie des Brennelements gegebenen winkelversetzten, zweiten Relativlage ein anderer Teil der Bypass-Öffnungen versperrt ist.

## Claims

1. Fuel element for a boiling water reactor with the following features:
a) the fuel element is surrounded by a casing (2) with a cross-section in the form of a rotationally symmetrical regular polygon and with an open upper and lower end,
b) extending into the lower end from below is an upper part (6) of a transition member (3) which tapers in a funnel-shaped manner toward an inlet (4) at the lower end,
c) the lower end of the casing (2) is fastened to the transition member (3) on all sides,
d) from the upper end of the casing to the transition member, an insert projects into the casing with
i) a head part (8) which has a handle (12), to which the upper end of a coolant duct (9) is fastened, and a cover plate (16) held on the handle and/or coolant duct,
ii) a perforated base plate (10) which is fastened to the lower end of the coolant duct (9) and sits on the upper edge of the transition member (3), and
iii) a cluster of fuel rods (1, 1a) held between base plate (10) and cover plate (16), and
e) all sides of the casing (2) bear below the base plate (10) in each case at least one lateral bypass opening (22, 23, 25), at least on one side one bypass opening (24) being connected to the interior of the transition member (3) by a flow duct (24) arranged between the casing wall and the transition member (3) with the mounted base plate (10), and on at least one other side the bypass opening (22) being blocked by a side surface on the base plate.

2. Fuel element according to Claim 1, characterized in that each side of the casing bears a bypass opening (22, 23, 25) in the vicinity of the central line.

3. Fuel element according to Claim 1 or 2, characterized in that each side of the casing is connected virtually tight to a contact surface (6) of the transition member (3).

4. Fuel element according to one of Claims 1 to 3, characterized in that each side of the casing is screwed to a contact surface (6) of the transition member (3) in the vicinity of the central line.

5. Fuel element according to one of Claims 1 to 4, characterized in that the base plate (10) rests on the upper edge (6) of the transition member (3) via adjustment feet (26) and in that at least one adjustment foot bears a recess for forming the flow duct (24) and at least one other adjustment foot bears the side surface for blocking the bypass opening.

6. Fuel element according to one of Claims 1 to 5, characterized in that the coolant duct (9) is surrounded on all sides by fuel rods of the cluster.

7. Fuel element for a boiling water reactor with the following features:
a) a cluster of fuel rods (1, 1a) is surrounded by a rotationally symmetrical polygonal casing (2) with an open lower end,
b) extending into the open lower end from below is an upper part (6) of a transition member which tapers toward an inlet (4) at the lower end,
c) bearing surfaces (6) of the transition member bear virtually positively against all sides of the casing,
d) the open upper end of the casing is, above the fuel rod cluster, covered by a head part with a perforated cover plate (16) and the open lower end of the casing is, below the fuel rods, covered by a perforated base plate (10), and
e) a bypass flow is guided from the interior of the transition member (3) via one or more lateral passage openings into the exterior of the casing and of the transition member in such a manner that a part of the casing sides is virtually sealed in relation to the transition member and only another part of the casing walls can be passed through by the bypass flow.

8. Fuel element according to Claim 7, characterized in that the casing walls are fastened, preferably detachably fastened, to the bearing surfaces of the transition member.

9. Fuel element according to Claim 7 or 8, characterized in that all casing walls bear bypass openings (22, 23, 25) which are offset rotationally symmetrically in relation to one another by 90°, but some of the bypass openings are blocked by outer surfaces of the base plate (20) bearing against the casing walls or downwardly projecting projections (26) of the base plate.

10. Fuel element according to Claim 9, characterized in that, in a first relative position between the casing and the base plate, first bypass openings are blocked, and in a second relative position, which is offset in relation to the first relative position by an angle given by the symmetry of the fuel element, other bypass openings are blocked.

## Revendications

1. Assemblage combustible d'un réacteur à eau sous pression ayant les caractéristiques suivantes :
a) l'assemblage combustible est entouré d'une boîte (2) ayant une section transversale en forme de polygône régulier à symétrie de révolution et ayant une extrémité supérieure ouverte et une extrémité inférieure ouverte,
b) une partie supérieure (6) d'une pièce (3) de passage se rétrécissant en entonnoir vers une admission (4) à l'extrémité inférieure fait saillie par le bas dans l'extrémité inférieure,
c) l'extrémité inférieure de la boîte (2) est fixée de tous côtés à la pièce (3) de passage,
d) un insert fait saillie de l'extrémité supérieure de la boîte jusqu'à la pièce de passage dans la boîte, comportant
i) une partie (8) de tête, qui comporte une griffe (12) à laquelle l'extrémité supérieure d'un canal (9) de fluide de refroidissement est fixée, et une plaque (16) de couverture maintenue à la prise et/ou au canal de fluide de refroidissement,
ii) une plaque (10) de base perforée fixée à l'extrémité inférieure du canal (9) de fluide de refroidissement et reposant sur le bord supérieur de la pièce (3) de passage, et
iii) un faisceau de crayons combustibles (1, 1a) qui est maintenu entre la plaque (10) de base et la plaque (16) de couverture, et
e) tous les côtés de la boîte (2) portent, en-dessous de la plaque (10) de base chacun au moins une ouverture (22, 23, 25) latérale de dérivation, une ouverture (24) de dérivation communiquant au moins d'un côté, par un canal (24) d'écoulement prévu entre la paroi de la boîte et la pièce (3) de passage par la plaque (10) de base reposant dessus, avec l'intérieur de la pièce (3) de passage, et l'ouverture (22) de dérivation étant obturée, au moins d'un autre côté, par une surface latérale de la plaque de base.

2. Assemblage combustible suivant la revendication 1,
caractérisé en ce que chaque côté de la boîte porte à proximité de la ligne médiane une ouverture (22, 23, 25) de dérivation.

3. Assemblage combustible suivant la revendication 1 ou 2,
caractérisé en ce que chaque côté de la boîte est relié de manière pratiquement étanche à une surface (6) d'application de la pièce (3) de passage.

4. Assemblage combustible suivant l'une des revendications 1 à 3,
caractérisé en ce que chaque côté de la boîte est vissé à proximité de la ligne médiane à une surface (6) d'application de la pièce (3) de passage.

5. Assemblage combustible suivant l'une des revendications 1 à 4,
caractérisé en ce que la plaque de base (10) repose par l'intermédiaire de pieds (26) de positionnement sur le bord supérieur (6) de la pièce (3) de passage et qu'au moins un pied de positionnement porte un évidement pour la formation du canal (24) d'écoulement et au moins un autre pied de positionnement porte la surface latérale destinée à obturer l'ouverture de dérivation.

6. Assemblage combustible suivant l'une des revendications 1 à 5,
caractérisé en ce que le canal (9) de fluide de refroidissement est entouré de tous côtés de crayons combustibles du faisceau.

7. Assemblage combustible pour un réacteur à eau sous pression ayant les caractéristiques suivantes :
a) un faisceau de crayons combustibles (1, 1a) est entouré par une boîte (2) polygonale à symétrie de révolution ayant une extrémité inférieure ouverte,
b) une partie supérieure (6) d'une pièce de passage se rétrécissant vers une admission (4) à l'extrémité inférieure fait saillie par le bas dans l'extrémité inférieure ouverte,
c) des surfaces (6) d'application de la pièce de passage s'appliquent pratiquement par complémentarité de formes à tous les côtés de la boîte,
d) l'extrémité supérieure ouverte de la boîte est recouverte, au-dessus du faisceau de crayons combustibles, par une pièce de tête ayant une plaque (16) de couverture perforée, et l'extrémité inférieure ouverte de la boîte est recouverte, en-dessous des crayons combustibles, par une plaque (10) de base perforée, et
e) un courant de dérivation est guidé de l'intérieur de la pièce (3) de passage par l'intermédiaire d'une ou de plusieurs ouvertures latérales de passage à l'extérieur de la boîte et de la pièce de passage, de telle sorte qu'une partie des côtés de la boîte soit pratiquement rendue étanche par rapport à la pièce de passage et que le courant de dérivation ne puisse passer que dans une autre partie des parois de la boîte.

8. Assemblage combustible suivant la revendication 7,
caractérisé en ce que les parois de la boîte sont fixées aux surfaces d'application de la pièce de passage, et sont de préférence fixées de manière amovible.

9. Assemblage combustible suivant la revendication 7 ou 8,
caractérisé en ce que toutes les parois de la boîte portent des ouvertures (22, 23, 25) de dérivation décalées les unes par rapport aux autres de 90° avec symétrie de révolution, mais qu'une partie des ouvertures de dérivation est obturée par des surfaces extérieures de la plaque (20) de base s'appliquant aux parois de la boîte ou par des saillies (26) de la plaque de base dirigées vers le bas.

10. Assemblage combustible suivant la revendication 9,
caractérisé en ce que une première partie des ouvertures de dérivation est obturée pour une première position relative entre la boîte et la plaque de base et qu'une autre partie des ouvertures de dérivation est obturée pour une deuxième position relative décalée angulairement par rapport à la première position relative et définie par la symétrie de l'assemblage combustible.
